(19) Europäisches Patentamt
European Patent Office
Office européen des brevets

(11) **EP 3 506 445 B1**

(12) **EUROPEAN PATENT SPECIFICATION**

(45) Date of publication and mention
of the grant of the patent:
**12.05.2021 Bulletin 2021/19**

(51) Int Cl.:
*H02H 3/17* (2006.01)     *H02H 9/08* (2006.01)

(21) Application number: **17460083.3**

(22) Date of filing: **27.12.2017**

(54) **SYSTEM FOR IDENTIFICATION OF A FEEDER WITH HIGH-OHMIC EARTH FAULT IN A DISTRIBUTION NETWORK**

SYSTEM ZUR IDENTIFIZIERUNG EINER EINSPEISUNG MIT HOCHOHMIGEM ERDSCHLUSS IN EINEM VERTEILUNGSNETZWERK

SYSTÈME D'IDENTIFICATION D'UNE LIGNE AVEC DÉFAUT À TERRE À HAUTE RÉSISTANCE DANS UN RÉSEAU DE DISTRIBUTION

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**03.07.2019 Bulletin 2019/27**

(73) Proprietor: **ABB Schweiz AG**
**5400 Baden (CH)**

(72) Inventors:
• **Krakowski, Marcin**
**04-282 Warszawa (PL)**

• **Dawidowski, Pawel**
**30-707 Krakow (PL)**

(74) Representative: **Wroblewski, Marcin Jan**
**Jvwf Rzecznicy Patentowi Marcin Wroblewscy**
**Swierkowa 18**
**95-083 Florentynow (PL)**

(56) References cited:
**CN-A- 107 317 309**     **CN-A- 107 482 607**
**JP-A- 2000 092 698**     **US-A1- 2016 041 216**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

**Description**

**Technical field**

The subject of the invention is a system for identification of the feeder with high-ohmic earth fault in the distribution network grounded with an arc suppression coil.

**Background art**

Commonly known earth fault protection systems for the distribution network grounded with arc suppression coil utilize injection devices adapted for injecting the measurement signals. The injection device comprises of an injection transformer that is adjusting injected signal level to the distribution network size. The injection device is equipped with a solid state switch connected to the one phase of substation auxiliary transformer. The switch is controlled by a control board. The control board drives the solid state valves in proper sequence and allows for the in-phase and counter phase signal injection to the distribution network. The measurement signal injection boosts zero-sequence voltage level and zero-sequence current flow, so that more sensitive earth fault detection becomes feasible.

EP 2128951 discloses an electronic active grounding system in distribution networks which is connectable in series with a neutral point of the network and with the grounding of a power transformer in some of its possible configurations like neutral point of the transformer or neutral point of a separate grounding transformer. The disclosed system comprises means for injecting a current into one phase of the network.

CN107317309 discloses a GOOSE-based grounding mode synergistic control conversion method comprising the steps of 1, inputting a grounding small resistor in a delay way when a grounding fault occurs, and simultaneously giving out a small resistor input GOOSE signal; 2, performing zero-sequence overcurrent distinguishing of each circuit, automatically tripping to isolate the fault, and simultaneously giving out a small resistor removal GOOSE signal; 3, performing bus fault distinguishing, wherein the step of performing bus fault distinguishing is simultaneously performed with the step 2; and 4, receiving the small resistor removal GOOSE signal to rapid removal the small resistor. The invention also discloses a GOOSE-based grounding mode synergistic control conversion system.

CN107482607 discloses a flexible grounding device can feed power distribution network, characterized in that comprises the three-phase PWM rectifier, the DC side capacitor, single-phase full-bridge inverter, the output LC filter and single-phase injection transformer. It discloses also fault arc extinction method includes the steps that when a single-phase grounding fault is generated, a neutral point of the power distribution network is grounded through a flexible grounding device, the flexible grounding device is controlled to inject a resistive current and a reactive current into the neutral point in sequence, a fault feeder line is judged, and arc extinction of a fault point is promoted.

Normally, the distribution network is equipped with intelligent electronic devices (IED) e.g. relays, located in all substation bays, that perform bay control and protection functions. One of the crucial protection function of the distribution network IEDs is the earth fault protection function, as earth faults are most frequent network disturbances.

Regarding the commonly utilized IED infrastructure for the earth fault protection systems there are two applied approaches. First is based on the IEDs distributed in the substation bays that are not sharing information related with earth fault detection between each other through the available horizontal communication link. Second approach is based on the one centralized IED that is taking current measurements from all substation bays.

Presented systems have many disadvantages. First, if an earth fault occurs in the same phase as the one that injection device is connected through the auxiliary transformer, the sensitivity of the high-ohmic earth fault detection radically decrease. Second, regular distributed IED infrastructure without the information exchange between neutral point devices and bay level devices also losses potential sensitivity for the high-ohmic earth faults. Finally, having one additional earth fault oriented central IED is more expensive, than solutions based on the devices that are already available in a substation.

**Summary of the invention**

The objective problem solved by the present invention can be formulated as providing a new way of identification of a feeder with high-ohmic earth fault in a distribution network.

The object of the invention is therefore the system according to claim 1 for identification of a feeder with high-ohmic earth fault in a distribution network, wherein the system includes the distribution network grounded with an arc suppression coil. The distribution network comprises n feeders each equipped with an intelligent electronics device of feeder bay. The distribution network has a neutral point and the arc suppression coil is connected between grounding and the neutral point. Furthermore, the distribution network is equipped with an auxiliary transformer and an injection device comprising a solid state switchgear having semiconductor valves, wherein the injection device has connection with the auxiliary transformer. The connection is realized by both neutral connection and all three phase connections with a low-voltage winding of the auxiliary transformer. The neutral point of the distribution network is also equipped with an intelligent electronics device of neutral point and said intelligent electronics device of neutral point is connected with the intelligent electronics devices of feeder bay by a substation horizontal communication network. Said injection device is configured to constantly inject generated measurement signal through the arc suppression coil to the distribution network in the following sequence:

- In-phase injection from the phase L1 for a fixed time $t_{on}$
- Pause for a fixed time $t_{off}$
- Counter-phase injection from the phase L1 for the time $t_{on}$
- Pause for the time $t_{off}$
- In-phase injection from the phase L2 for the time $t_{on}$
- Pause for the time $t_{off}$
- Counter-phase injection from the phase L2 for the time $t_{on}$
- Pause for the time $t_{off}$
- In-phase injection from the phase L3 for the time $t_{on}$
- Pause for the time $t_{off}$
- Counter-phase injection from the phase L3 for the time $t_{on}$
- Pause for the time $t_{off}$.

Preferably the solid state switchgear is connected with a control board for triggering the electronic valves of the solid state switchgear.

Preferably the injection device has an injection transformer connected between a power auxiliary winding of the arc suppression coil and the solid state switchgear.

Preferably the injection device is powered by the auxiliary transformer.

The object of the invention, according to claim 5, is also a method of identification of n feeders with high-ohmic earth fault in a distribution network using a system according the first object of the invention, comprises the steps of:

a) generating constantly the injection signal by the injection device and injecting the signal into the distribution network in the following sequence:

- In-phase injection from the phase L1 for a fixed time ton
- Pause for a fixed time toff
- Counter-phase injection from the phase L1 for the time ton
- Pause for the time toff
- In-phase injection from the phase L2 for the time ton
- Pause for the time toff
- Counter-phase injection from the phase L2 for the time ton
- Pause for the time toff
- In-phase injection from the phase L3 for the time ton
- Pause for the time toff
- Counter-phase injection from the phase L3 for the time ton
- Pause for the time toff.

b) detecting the high-ohmic earth-fault in the distribution network by the intelligent electronics device of neutral point and generating a binary signal of the earth-fault detection by the intelligent electronics device of neutral point;
c) sending the binary signal of the earth-fault detection by the intelligent electronics device of neutral point through a substation horizontal communication network to the intelligent electronics devices of feeder bay;
d) calculating a local directional criterion $d_{0Fi}$ by each intelligent electronics device of the feeder bay;
e) detecting an i-th faulty feeder from n feeders by checking a sign (+) or (-) of the local directional criterion $d_{0Fi}$ and if the sign is negative then the n feeder is identified as the i-th faulty feeder.

Preferably, the local directional criterion $d_{0Fi}$ is calculated according to the following formula:

$$d_{0Fi} = \cos\left(\arg\left(\frac{\Delta \underline{I}_{0Fi}}{\Delta \underline{V}_0}\right)\right)$$

where is $\Delta I_{0Fi}$ the difference between residual current measured in the i-th feeder bay during counter-phase and in phase injection from all phases and $\Delta V_0$ is the difference between residual voltage measured from open-delta connected voltage transformers during counter-phase and in phase injection from all three phases.

Preferably the method includes additional last step of automatically tripping off the i-th faulty feeder.

Preferably the method includes additional last step displaying an alert including the number of the i-th faulty feeder.

The proposed solutions of system for and method of identification of the feeder with high-ohmic earth fault eliminates disadvantages of common solutions by providing three phase injection sequence and by introducing horizontal data exchange between earth fault protection functions in the intelligent electronics device of neutral point and the intelligent electronics devices of feeder bay. In order to obtain increased sensitivity additional measurement signal is injected from three different phases of the substation auxiliary transformer to the medium voltage network neutral point through the arc suppression coil. The sensitivity is also increased by distributing detection signal from the network neutral point to the bay-related protection units through the substation horizontal communication network. Injection from the three phases allows for rejecting the less sensitive result, when the faulted phase is the same as the one that at the moment is performing the injection. Additionally, having the start criterion from the IED of neutral point is more sensitive as the residual current in the neutral point is the geometrical sum of all bays residual currents, so signal level is at this point the highest. Then the faulted bay is identified through the direction of the criterion value in the IED of feeder bay even when the value is relatively small in terms of the magnitude assuming it is high enough to measure it.

**Brief description of drawings**

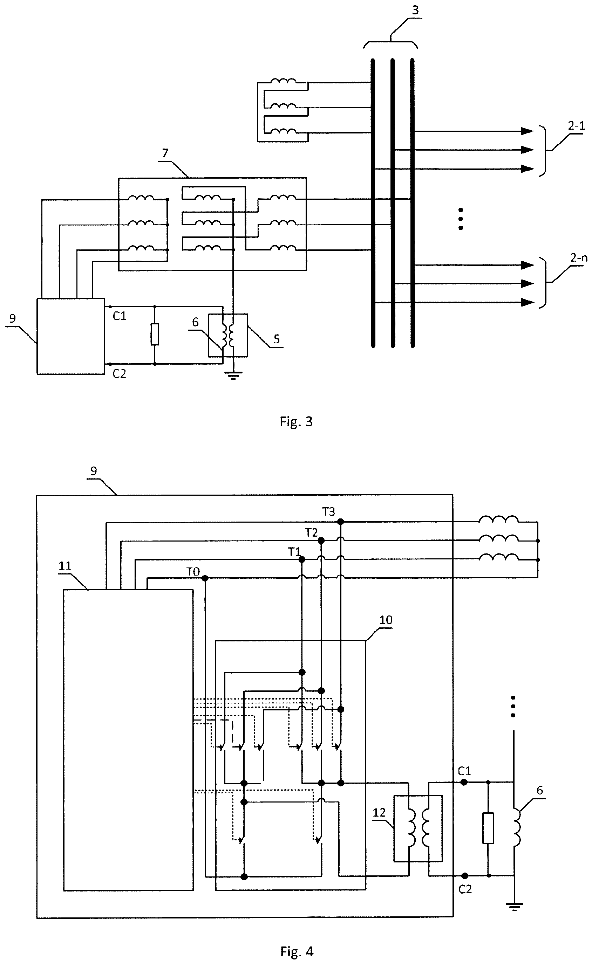

The subject of the invention is presented in the drawing where fig. 1 shows example of the distribution network topology including an injection device according to the present invention, fig. 2 shows second embodiment of the distribution network topology including an injection device according to the present invention, fig. 3 shows schematically three-phase connection of the injection device to the distribution network according to the present invention and fig. 4 shows schematically topology of the injection device according to the present invention.

**Detailed description of preferred embodiments**

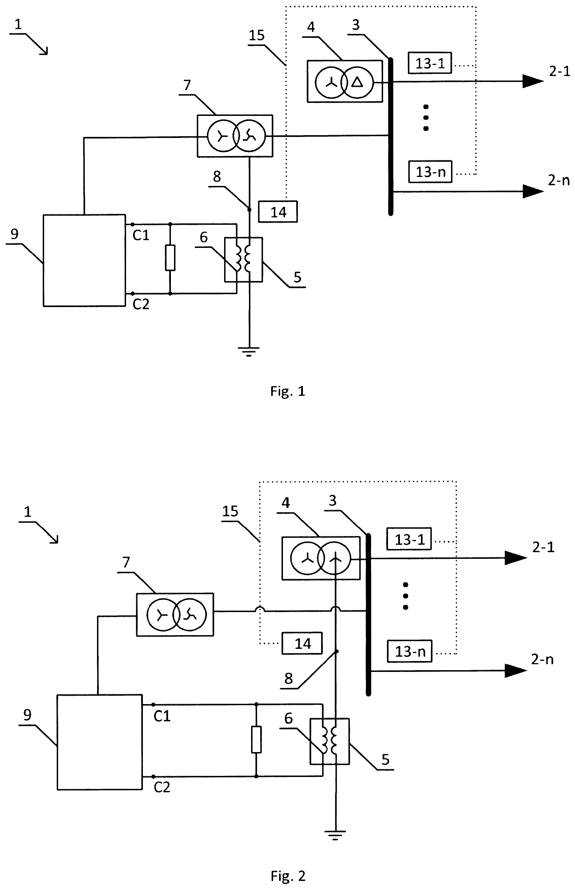

A distribution network 1 contains a set of n feeders 2-1 ... 2-n connected through a substation bus-bar 3 with a power transformer 4. The distribution network is supplied by the power transformer 4 and it is grounded through an arc suppression coil 5, which is connected to a star point of an auxiliary transformer 7 as it is shown on Fig. 1. The star point of the auxiliary transformer 7 is called network neutral point 8. In the second embodiment of the distribution network 1, the arc suppression coil 5 is connected to the star point of power transformer 4 as it is shown on Fig. 2. Then the star point of the power transformer 4 is called network neutral point 8'. The arc suppression coil 5 is equipped with a power auxiliary winding 6, which is utilized to connect an injection device 9 through terminals C1 and C2.

The injection device 9 comprises a solid state switchgear 10 connected with a low-voltage winding of the auxiliary transformer 7. The connection is realized in the following way. The solid switchgear has semiconductor valves which are connected to all three phases of the low-voltage winding through terminals T 1, T2 and T3 and are connected to a neutral point of the auxiliary transformer 7 through the terminal T0. The connection allows for the in-phase and counter phase signal injection from all three phases. The solid state switchgear 10 is controlled by a control board 11 driving the solid state valves of the solid state switchgear 10 in a proper sequence. The signals generated by the solid state switchgear 10 are injected through an injection transformer 12 that is adjusting injected signal level to the distribution network size.

The distribution network 1 comprises set of feeder bays each equipped with an intelligent electronics devices (IEDs) 13-1... 13-n of feeder bay, each corresponding to the particular feeder 2-1 ... 2-n. The network neutral point 8, 8' is equipped with an intelligent electronics device (IED) 14 of neutral point. The IEDs 13-1 ... 13-n of feeder bay and the IED 14 of neutral point are connected by the substation horizontal communication network 15, e.g. GOOSE horizontal communication. The IEDs 13-1 ... 13n of feeder bay and the IED 14 of neutral point are in the form of protection relays.

The method of identification of the feeder with high-ohmic earth fault comprises the following steps.

Step 1.

Constantly injecting the measurement signal to the distribution network 1. The signal is generated by the injection device 9 and injected through the arc suppression coil 5 to the whole distribution network 1. The injection is realized in the following sequence:

    1. In-phase injection from the phase L1 for a fixed time $t_{on}$

2. Pause for a fixed time $t_{off}$

3. Counter-phase injection from the phase L1 for the time $t_{on}$

4. Pause for the time $t_{off}$

5. In-phase injection from the phase L2 for the time $t_{on}$

6. Pause for the time $t_{off}$

7. Counter-phase injection from the phase L2 for the time $t_{on}$

8. Pause for the time $t_{off}$

9. In-phase injection from the phase L3 for the time $t_{on}$

10. Pause for the time $t_{off}$

11. Counter-phase injection from the phase L3 for the time $t_{on}$

12. Pause for the time $t_{off}$

Step 2.

Detecting the high-ohmic earth-fault in the distribution network by the IED 14 of neutral point. The step is realized by computing the damping coefficient $d_0$, that corresponds to the relation between active and reactive residual admittance of the distribution network, during the in phase and counter phase injection period from all phases according to the formula:

$$d_0 = \cos\left(\arg\left(\frac{\underline{I}_0}{\underline{V}_0}\right)\right) \qquad \text{(Equation 1)}$$

where $\underline{I}_0$ is the residual current measured in the neutral point 8, 8' and $\underline{V}_0$ is the residual voltage measured from open-delta connected voltage transformers. The earth-fault is detected when the damping coefficient $d_0$ is higher than the predefined threshold. In that case the next step of the method is executed.

Step 3.

Publishing a binary signal of the earth-fault detection by the IED 14 of neutral point. Publishing is realized through the substation horizontal communication network 15, e.g. GOOSE horizontal communication.

Step 4.

Subscribing the binary signal of the earth-fault detection by the IEDs 13-1 13-n of feeder bay.

Step 5.

Calculating a local directional criterion $d_{0Fi}$ by each IED 13-1 ... 13-n of feeder bay. The local directional criterion $d_{0Fi}$ on the i-th feeder bay is calculated from the following formula:

$$d_{0Fi} = \cos\left(\arg\left(\frac{\Delta \underline{I}_{0Fi}}{\Delta \underline{V}_0}\right)\right) \qquad \text{(Equation 2)}$$

where $\Delta \underline{I}_{0Fi}$ is the difference between residual current measured in the i-th feeder bay during counter-phase and in phase injection from all phases and $\Delta \underline{V}_0$ is the difference

between residual voltage measured from open-delta connected voltage transformers during counter-phase and in phase injection from all phases.

Step 6.

Detecting a faulty feeder 2-1... 2-n based on the local directional criterion by the IEDs 13-1 ... 13-n of feeder bay. Negative sign of the $d_{0Fi}$ during counter-phase injection in i-th feeder along with earth fault detection signal from the IED 14 of neutral point determine that there is an earth-fault at i-th feeder.

Step 7.

Signalling the faulty feeder or automatically tripping off the faulty feeder. The last step is not obligatory and can be realized in different ways. Information about faulty feeder can be displayed directly at the IED of feeder bay or can be sent to any display showing the status of particular feeders. It is also possible that information about earth-fault can start tripping off the faulty feeder.

Nomenclature

1 - distribution network
2-1... 2-n - feeders
3 - substation busbar
4 - power transformer
5 - arc suppression coil
6 - power auxiliary winding of the arc suppression coil 5
7 - auxiliary transformer
8, 8' - neutral point
9 - injection device
10 - solid state switchgear
11 - control board
12 - injection transformer
13-1... 13-n - intelligent electronics devices of feeder bay (IED of feeder bay)
14 - intelligent electronics device of neutral point (IED of neutral point)
15 - substation horizontal communication network

**Claims**

1. System for identification of a feeder (2-1 ... 2-n) with high-ohmic earth fault in a distribution network (1) grounded with an arc suppression coil (5), the system comprising a distribution network (1) where each feeder (2-1 ... 2-n) of the distribution network (1) is equipped with an intelligent electronics device (13-1 ... 13-n) of feeder bay; said distribution network (1) has a neutral point (8) or (8') and the arc suppression coil (5) is connected between grounding and the neutral point (8) or (8') and the distribution network (1) is equipped with an auxiliary transformer (7) and an injection device (9) **characterized in that**:

   - the neutral point (8) or (8') of the distribution network (1) is equipped with an intelligent electronics device (14) of neutral point;
   - the intelligent electronics device (14) of neutral point is connected with the intelligent electronics devices (13-1...13-n) of feeder bay by a substation horizontal communication network (15);
   - the injection device (9) comprises a solid state switchgear (10) having semiconductor valves connected to all three-phases of the low-voltage winding of the auxiliary transformer (7) via terminals (T1, T2, T3) and with a neutral point of the auxiliary transformer (7) via terminal (T0);
   - and said injection device (9) is configured to constantly inject generated measurement signal through the arc suppression coil (5) to the distribution network (1) in the following sequence:

     - In-phase injection from the phase L1 for a fixed time $t_{on}$
     - Pause for a fixed time $t_{off}$
     - Counter-phase injection from the phase L1 for the time $t_{on}$
     - Pause for the time $t_{off}$
     - In-phase injection from the phase L2 for the time $t_{on}$
     - Pause for the time $t_{off}$
     - Counter-phase injection from the phase L2 for the time $t_{on}$
     - Pause for the time $t_{off}$
     - In-phase injection from the phase L3 for the time $t_{on}$
     - Pause for the time $t_{off}$
     - Counter-phase injection from the phase L3 for the time $t_{on}$

- Pause for the time $t_{off}$.

2. A system according to claim 1 **characterized in that**, the solid state switchgear (10) is connected with a control board (11) for triggering the electronic valves of the solid state switchgear (10).

3. A system according to claim 2, **characterized in that**, the injection device (9) has an injection transformer (12) connected between a power auxiliary winding (6) of the arc suppression coil (5) and the solid state switchgear (10).

4. A system according to any of claims 1 to 3, **characterized in that**, the injection device (9) is powered by the auxiliary transformer (7).

5. Method of identification of a feeder (2-1 ... 2-n) with high-ohmic earth fault in a distribution network (1) using a system according to claim 1, the method comprising the steps of:

   a) generating constantly the injection measurement signal by the injection device (9) and injecting the signal into the distribution network (1) in the following sequence:

   - In-phase injection from the phase L1 for a fixed time $t_{on}$
   - Pause for a fixed time $t_{off}$
   - Counter-phase injection from the phase L1 for the time $t_{on}$
   - Pause for the time $t_{off}$
   - In-phase injection from the phase L2 for the time $t_{on}$
   - Pause for the time $t_{off}$
   - Counter-phase injection from the phase L2 for the time $t_{on}$
   - Pause for the time $t_{off}$
   - In-phase injection from the phase L3 for the time $t_{on}$
   - Pause for the time $t_{off}$
   - Counter-phase injection from the phase L3 for the time $t_{on}$
   - Pause for the time $t_{off}$.

   b) detecting the high-ohmic earth-fault in the distribution network (1) by the intelligent electronics device (14) of neutral point and generating a binary signal of the earth-fault detection by the intelligent electronics device (14) of neutral point;
   c) sending the binary signal of the earth-fault detection by the intelligent electronics device (14) of neutral point through a substation horizontal communication network (15) to the intelligent electronics devices (13-1 ... 13-n) of feeder bay;
   d) calculating a local directional criterion $d_{0Fi}$ by each intelligent electronics device (13-1 ... 13-n) of the feeder bay;
   e) detecting an i-th faulty feeder from the feeders (2-1 ... 2-n) by checking a sign (+) or (-) of the local directional criterion $d_{0Fi}$ and if the sign is negative then the feeder (2-1 ... 2n) is identified as the i-th faulty feeder.

6. Method according to claim 5, wherein the local directional criterion $d_{0Fi}$ is calculated according to the following formula:

$$d_{0Fi} = \cos\left( \arg\left( \frac{\Delta \underline{I}_{0Fi}}{\Delta \underline{V}_0} \right) \right) .$$

where $\Delta I_{0Fi}$ is the difference between residual current measured in the i-th feeder bay during counter-phase and in phase injection from all phases and $\Delta V_0$ is the difference between residual voltage measured from open-delta connected voltage transformers during counter-phase and in phase injection from all three phases.

7. Method according to claim 5 or 6, wherein the method includes additional last step:

   - automatically tripping off the i-th faulty feeder.

8. Method according to claim 5 or 6, wherein the method includes additional last step:

   - displaying an alert including the number of the i-th faulty feeder.

**Patentansprüche**

1. System zur Identifizierung einer Zuführung (2-1 ... 2-n) mit hochohmigem Erdschluss in einem Verteilungsnetz (1), das mit einer Erdschlusslöschspule (5) geerdet ist, wobei das System ein Verteilungsnetz (1) umfasst, in dem jede Zuführung (2-1 ... 2-n) des Verteilungsnetzes (1) mit einer intelligenten Elektronikeinrichtung (13-1 ... 13-n) des Zuführungsfeldes ausgestattet ist; das Verteilungsnetz (1) einen neutralen Punkt (8) oder (8') aufweist und die Erdschlusslöschspule (5) zwischen die Erdung und den neutralen Punkt (8) oder (8') geschaltet ist und das Verteilungsnetz (1) mit einem Hilfstransformator (7) und einer Injektionsvorrichtung (9) ausgestattet ist, **dadurch gekennzeichnet, dass**:

   - der neutrale Punkt (8) oder (8') des Verteilungsnetzes (1) mit einer intelligenten Elektronikeinrichtung (14) des neutralen Punktes ausgestattet ist;
   - die intelligente Elektronikeinrichtung (14) des neutralen Punktes mit den intelligenten Elektroniken (13-1...13-n) des Zuführungsfeldes über ein horizontales Kommunikationsnetz (15) der Unterstation verbunden ist;
   - die Injektionsvorrichtung (9) ein Halbleiterschaltgerät (10) umfasst, das Halbleiterventile aufweist, die mit allen drei Phasen der Niederspannungswicklung des Hilfstransformators (7) über Klemmen (T1, T2, T3) und mit einem neutralen Punkt des Hilfstransformators (7) über Klemme (T0) verbunden sind;
   - und die Injektionsvorrichtung (9) so konfiguriert ist, dass sie das erzeugte Messsignal durch die Erdschlusslöschspule (5) konstant in der folgenden Reihenfolge in das Verteilungsnetz (1) injiziert:

      - Gleichphasige Injektion aus der Phase L1 für eine feste Zeit $t_{on}$
      - Pause für eine feste Zeit $t_{off}$
      - Gegenphasige Injektion von der Phase L1 für die Zeit $t_{on}$
      - Pause für die Zeit $t_{off}$
      - Phasengleiche Injektion von der Phase L2 für die Zeit $t_{on}$
      - Pause für die Zeit $t_{off}$
      - Gegenphasige Injektion von der Phase L2 für die Zeit $t_{on}$
      - Pause für die Zeit $t_{off}$
      - Phasengleiche Injektion von der Phase L3 für die Zeit $t_{on}$
      - Pause für die Zeit $t_{off}$
      - Gegenphasige Injektion von der Phase L3 für die Zeit $t_{on}$
      - Pause für die Zeit $t_{off}$.

2. System nach Anspruch 1, **dadurch gekennzeichnet, dass** das Halbleiterschaltgerät (10) mit einer Steuerplatine (11) zur Ansteuerung der elektronischen Ventile des Halbleiterschaltgeräts (10) verbunden ist.

3. System nach Anspruch 2, **dadurch gekennzeichnet, dass** die Injektionsvorrichtung (9) einen Injektionstransformator (12) aufweist, der zwischen einer Leistungshilfswicklung (6) der Erdschlusslöschspule (5) und dem Halbleiterschaltgerät (10) angeschlossen ist.

4. System nach einem der Ansprüche 1 bis 3, **dadurch gekennzeichnet, dass** die Injektionsvorrichtung (9) durch den Hilfstransformator (7) angetrieben wird.

5. Verfahren zur Identifizierung einer Zuführung (2-1 ... 2-n) mit hochohmigem Erdschluss in einem Verteilungsnetz (1) unter Verwendung eines Systems nach Anspruch 1, wobei das Verfahren die folgenden Schritte umfasst:

   a) das Injektionsmesssignal durch die Injektionsvorrichtung (9) konstant zu erzeugen und das Signal in das Verteilungsnetz (1) in folgender Reihenfolge einzugeben:

      - Gleichphasige Injektion aus der Phase L1 für eine feste Zeit $t_{on}$
      - Pause für eine feste Zeit $t_{off}$
      - Gegenphasige Injektion von der Phase L1 für die Zeit $t_{on}$
      - Pause für die Zeit $t_{off}$
      - Phasengleiche Injektion von der Phase L2 für die Zeit $t_{on}$
      - Pause für die Zeit $t_{off}$
      - Gegenphasige Injektion von der Phase L2 für die Zeit $t_{on}$
      - Pause für die Zeit $t_{off}$
      - Phasengleiche Injektion von der Phase L3 für die Zeit $t_{on}$

- Pause für die Zeit $t_{off}$
- Gegenphasige Injektion von der Phase L3 für die Zeit $t_{on}$
- Pause für die Zeit $t_{off}$.

b) Erfassen des hochohmigen Erdschlusses im Verteilungsnetz (1) durch die intelligente Elektronikeinrichtung (14) des neutralen Punktes und Erzeugen eines binären Signals der Erdschlusserfassung durch die intelligente Elektronikeinrichtung (14) des neutralen Punktes;

c) Senden des binären Signals der Erdschlusserfassung durch die intelligente Elektronikeinrichtung (14) des neutralen Punktes über ein horizontales Kommunikationsnetz (15) der Unterstation an die intelligenten Elektronikeinrichtungen (13-1... 13-n) des Zuführungsfeldes;

d) Berechnung eines lokalen Richtungskriteriums $d_{0Fi}$ durch jede intelligente Elektronikeinrichtung (13-1... 13-n) des Zuführungsfeldes;

e) Erkennen einer i-ten fehlerhaften Zuführung aus den Zuführungen (2-1... 2-n) durch Prüfen eines Vorzeichens (+) oder (-) des lokalen Richtungskriteriums $d_{0Fi}$ und wenn das Vorzeichen negativ ist, dann wird die Zuführung (2-1... 2n) als die i-te fehlerhafte Zuführung identifiziert.

**6.** Verfahren nach Anspruch 5, wobei das lokale Richtungskriterium $d_{0Fi}$ nach der folgenden Formel berechnet wird:

$$d_{0Fi} = \cos\left(\arg\left(\frac{\Delta \underline{I}_{0Fi}}{\Delta \underline{V}_0}\right)\right)$$

wobei $\Delta_{i0Fi}$ die Differenz zwischen dem im i-ten Zuführungsfeld gemessenen Fehlerstrom während der Gegenphase und der Injektion in die Phase von allen Phasen und $\Delta V_0$ die Differenz zwischen der an den im offenen Dreieck geschalteten Spannungswandlern gemessenen Fehlerstromspannung während der Gegenphase und der Injektion in die Phase von allen drei Phasen ist.

**7.** Verfahren nach Anspruch 5 oder 6, wobei das Verfahren einen zusätzlichen letzten Schritt umfasst:

- automatische Abschaltung der i-ten fehlerhaften Zuführung.

**8.** Verfahren nach Anspruch 5 oder 6, wobei das Verfahren einen zusätzlichen letzten Schritt umfasst:

- Anzeige einer Warnmeldung mit der Nummer der i-ten fehlerhaften Zuführung.

## Revendications

**1.** Système d'identification d'un chargeur (2-1... 2-n) avec défaut à la terre à haute ohmique dans un réseau de distribution (1) mis à la terre avec une bobine de suppression d'arc (5), le système comprenant un réseau de distribution (1) où chacun chargeur (2-1... 2-n) du réseau de distribution (1) est équipé d'un dispositif électronique intelligent (13-1... 13-n) de la baie de chargeur; ledit réseau de distribution (1) a un point neutre (8) ou (8') et la bobine de suppression d'arc (5) est connectée entre la mise à la terre et le point neutre (8) ou (8') et le réseau de distribution (1) est équipé d'un transformateur auxiliaire (7) et d'un dispositif d'injection (9) **caractérisé en ce que**:

- le point neutre (8) ou (8') du réseau de distribution (1) est équipé d'un dispositif électronique intelligent (14) de point neutre;
- le dispositif électronique intelligent (14) du point neutre est relié aux dispositifs électroniques intelligents (13-1...13-n) de la baie de chargeur par un réseau de communication horizontal (15) de sous-station;
- le dispositif d'injection (9) comprend un appareillage à semi-conducteurs (10) comportant des vannes à semi-conducteurs connectées aux trois phases du bobinage basse tension du transformateur auxiliaire (7) via des bornes (T1, T2, T3) et avec un neutre point du transformateur auxiliaire (7) via la borne (T0);
- et ledit dispositif d'injection (9) est configuré pour injecter en permanence le signal de mesure généré à travers la bobine de suppression d'arc (5) vers le réseau de distribution (1) dans la séquence suivante:

- Injection en phase à partir de la phase L1 pendant un temps fixe $t_{on}$
- Pause pendant un temps fixe $t_{off}$

- Injection en contre-phase à partir de la phase L1 pendant un temps $t_{on}$
- Pause pendant un temps fixe $t_{off}$
- Injection en phase à partir de la phase L2 pendant un temps $t_{on}$
- Pause pendant un temps $t_{off}$
- Injection en contre-phase à partir de la phase L2 pendant un temps $t_{on}$
- Pause pendant un temps $t_{off}$
- Injection en phase à partir de la phase L3 pendant un temps $t_{on}$
- Pause pendant un temps $t_{off}$
- Injection en contre-phase à partir de la phase L3 pendant un temps $t_{on}$
- Pause pendant un temps $t_{off}$.

2. Système selon la revendication 1, **caractérisé en ce que** l'appareillage de commutation à semi-conducteurs (10) est relié à une carte de commande (11) pour déclencher les vannes électroniques de l'appareillage à semi-conducteurs (10).

3. Système selon la revendication 2, **caractérisé en ce que** le dispositif d'injection (9) comporte un transformateur d'injection (12) connecté entre un bobinage auxiliaire de puissance (6) de la bobine de suppression d'arc (5) et l'appareillage à semi-conducteurs (10).

4. Système selon l'une quelconque des revendications 1 à 3, **caractérisé en ce que** le dispositif d'injection (9) est alimenté par le transformateur auxiliaire (7).

5. Méthode d'identification d'un chargeur (2-1... 2-n) avec défaut à la terre à haute ohmique dans un réseau de distribution (1) utilisant un système selon la revendication 1, le procédé comprenant les étapes de:

   a) générer en permanence le signal de mesure d'injection par le dispositif d'injection (9) et injecter le signal dans le réseau de distribution (1) dans l'ordre suivant:

   - Injection en phase à partir de la phase L1 pendant un temps fixe $t_{on}$
   - Pause pendant un temps fixe $t_{off}$
   - Injection en contre-phase à partir de la phase L1 pendant un temps $t_{on}$
   - Pause pendant un temps $t_{off}$
   - Injection en phase à partir de la phase L2 pendant un temps $t_{on}$
   - Pause pendant un temps $t_{off}$
   - Injection en contre-phase à partir de la phase L2 pendant un temps $t_{on}$
   - Pause pendant un temps $t_{off}$
   - Injection en phase à partir de la phase L3 pendant un temps $t_{on}$
   - Pause pendant un temps $t_{off}$
   - Injection en contre-phase à partir de la phase L3 pendant un temps $t_{on}$
   - Pause pendant un temps $t_{off}$.

   b) détection du défaut à la terre à haute ohmique dans le réseau de distribution (1) par le dispositif électronique intelligent (14) du point neutre et génération d'un signal binaire de la détection du défaut à la terre par le dispositif électronique intelligent (14) du point neutre;
   c) envoi du signal binaire de la détection de défaut à la terre par le dispositif électronique intelligent (14) du point neutre via un réseau de communication horizontal (15) de sous-station vers les dispositifs électroniques intelligents (13-1... 13-n) de la baie de chargeur;
   d) calcul d'un critère directionnel local $d_{0Fi}$ par chaque dispositif électronique intelligent (13-1..... 13-n) de la baie de chargeur;
   e) détection d'un i-ème chargeur de défaut des chargeurs (2-1... 2-n) en vérifiant un signe (+) ou (-) du critère directionnel local $d_{0Fi}$ et si le signe est négatif alors le chargeur (2-1... 2n) est identifié comme le i-ème chargeur de défaut.

6. Méthode selon la revendication 5, dans laquelle le critère directionnel local $d_{0Fi}$ est calculé selon la formule suivante:

$$d_{0Fi} = \cos\left( \arg\left( \frac{\Delta \underline{I}_{0Fi}}{\Delta \underline{V}_0} \right) \right)$$

Où $\Delta i_{0Fi}$ est la différence entre le courant résiduel mesuré dans la i-ème baie de chargeur pendant la contre-phase et l'injection de phase de toutes les phases et $\Delta V0$ est la différence entre la tension résiduelle mesurée à partir des transformateurs de tension connectés en triangle ouvert pendant la contre-phase et en phase injection des trois phases.

7. Méthode selon la revendication 5 ou 6, dans laquelle la méthode comprend une dernière étape supplémentaire:

   - déclenchement automatique du i-ème chargeur de défaut.

8. Méthode selon la revendication 5 ou 6, dans laquelle la méthode comprend une dernière étape supplémentaire:

   - affichage d'une alerte avec le numéro du i-ème chargeur de défaut.

Fig. 1

Fig. 2

Fig. 3

Fig. 4

**EP 3 506 445 B1**

**REFERENCES CITED IN THE DESCRIPTION**

**Patent documents cited in the description**

- EP 2128951 A
- CN 107317309
- CN 107482607